# EUROPÄISCHE PATENTSCHRIFT

(11) **EP 2 330 058 B1**
(45) Veröffentlichungstag und Bekanntmachung des Hinweises auf die Patenterteilung: **26.02.2014**
(21) Anmeldenummer: 10014394.0
(22) Anmeldetag: 09.11.2010
(51) Int. Cl.: B65G 1/02, B65G 1/04

(54) **Lagerregalanordnung**
Storage shelf assembly
Agencement d'entrepôt à étagères

(30) Priorität: 01.12.2009 DE 202009016291 U
(43) Veröffentlichungstag der Anmeldung: 08.06.2011
(73) Patentinhaber: Fritz Schäfer GmbH, 57290 Neunkirchen (DE)
(72) Erfinder: Senff, Udo, 57234 Wilnsdorf (DE)
(74) Vertreter: Grosse, Wolf-Dietrich Rüdiger

(56) Entgegenhaltungen:
- DE-A1-102007 060 730
- DE-U1- 29 519 942
- US-A- 2 096 958
- US-A- 3 434 604
- US-A- 4 872 800

## Beschreibung

Die Erfindung betrifft eine Lagerregalanordnung, insbesondere für auf Paletten umzuschlagende Waren, umfassend mindestens einen Gang mit parallel zu dessen Seiten aneinandergereiht ausgebildeten, orthogonal zum Gang optional blockweise angeordneten Regalen, die jeweils aus vorderen und hinteren Eckpfosten sowie in den Ladungsebenen vorgesehenen, die beiden vorderen und die beiden hinteren Eckpfosten eines Regals verbindenden, Auflager für das Ladegut bereitstellenden Längsträgern bestehen, und zumindest eine aufgesetzte, für Personen zugängliche, auf Trägerprofilen abgestützte Bühne.

Eine derartige Lageranordnung, ohne allerdings eine Bühne, ist durch die DE 10 2007 060 730 A 1, die den Oberbegriff des Anspruchs 1 offenbart, bekannt geworden. In solchen Palettenregalen werden üblich Waren bzw. Ladegüter auf Paletten mit Hilfe von Staplergeräten eingelagert und sind daher für Personen oder Hubwagen nur in den unteren Ebenen zugänglich. Eine Entnahme von Produkten ist somit nur mittels eines Staplerfahrzeuges oder dergleichen möglich. Befindet sich ein Palettenregallager in einem Lager mit Kundenverkehr, wo es gezielt die Absicht ist, dass der Kunde die Produkte direkt selbst aus dem Regal entnehmen kann, ist dieses nur in den unteren Ebenen möglich. Produkte, Waren oder Güter aus den höheren Regalfächern sind nur mit Hilfe des Personals bzw. eines Staplerfahrzeuges zugänglich. Da diese Gänge stets für Publikumsverkehr zugänglich sind, ist zudem ein ständiges Befahren der Regalgänge mit Staplerfahrzeugen sehr gefährlich.

Um diese Nachteile zu vermeiden ist es bekannt, in die Palettenregale Bühnenebenen zu integrieren, die für die Personen über Treppen zugänglich sind. Mit Hilfe dieser aufgesetzten Bühnen werden gleichzeitig mehrere nebeneinander vorgesehene Regale begehbar miteinander verbunden. Zur Ausbildung einer Bühne in den oberen Ebenen der Palettenregale werden in der gewünschten Höhenebene in Längsrichtung der aneinandergereihten Regale verlaufend und alle Eckpfosten bzw. Regalständer einbeziehend Bühnenträger, Stahlprofile oder dergleichen, montiert, die dann die Bühne stützen und tragen. Der Gang zwischen zwei beidseitigen Regalreihen wird von einem stabilen Verbindungsprofil, gleichzeitig ebenfalls Träger der Bühne, überbrückt, und zwar auch abgestützt auf den an den Regal-Eckpfosten befestigten Bühnenträgern, so dass auf die Regal-Eckpfosten ein zusätzlich schweres Gewicht lastet.

Zwar sind so auch die oberen Regalfächer eines hohen Palettenregals für den Kundenverkehr zugänglich, jedoch hat eine solche Bühnenkonstruktion erhebliche Nachteile. Diese begründen sich in dem enormen auf die Regalständer bzw. Eckpfosten lastenden Gewicht. Wenn es beispielsweise durch ein Staplerfahrzeug zu einer Beschädigung im Bodenbereich eines Eckpfostens kommt, wird auch gleichzeitig der Unterbau beschädigt, auf dem die Bühnenträger liegen. Bei geringfügiger Beschädigung kann dies evtl. noch keine offensichtlichen Auswirkungen auf die Bühnenkonstruktion haben. Jedoch wirkt sich die Beschädigung eines Regalständers nicht nur auf die jeweilige einzelne Bühnenabstützung aus, sondern zieht auch die umliegenden Regalständer automatisch in Mitleidenschaft, da die Bühnenfläche den immensen wirkenden Kräften nicht standhalten kann.

Der beschädigte Regalständer muß somit schnellstmöglich ausgetauscht werden, damit kein weiterer Schaden entstehen und insbesondere die Sicherheit des Personenverkehrs weiterhin gewährleistet werden kann. lm schlimmsten Fall würde nämlich, ähnlich einer Kettenreaktion, den Regalständern der Unterbau wegbrechen und damit einhergehend aber auch die komplette Bühnenfläche aus dem Gleichgewicht gebracht werden.

Der Erfindung liegt daher die Aufgabe zugrunde, eine Lagerregalanordnung der eingangs genannten Art ohne die Nachteile des Standes der Technik zu schaffen, insbesondere die Stabilität und damit Sicherheit zu verbessern.

Diese Aufgabe wird erfindungsgemäß dadurch gelöst, dass die Bühne, gemäß Anspruch 1, entkoppelt von den Regalen abgestützt ist. Es lässt sich damit erreichen, dass im Falle eines im Bodenbereich beschädigten Eckpfostens des Regals dieses keine Auswirkungen mehr auf den Unterbau der Bühnenkonstruktion nehmen kann, denn die Abstützung der Bühne bleibt unbeschadet davon aufrechterhalten. Eine Personengefährdung besteht nicht, denn die Begehbarkeit der Bühne ist unverändert gewährleistet.

Eine bevorzugte Ausführung der Erfindung sieht vor, daß die Regale in Flucht zu den von ihrer Bedienungsseite her gesehen außen liegenden vorderen und hinteren Eckpfosten angeordnete Bühnenstützen mit einer größeren Länge als die Eckpfosten aufweisen. Zur Entkopplung brauchen die Bühnenstützen die Regal-Eckpfosten nach oben hin nur geringfügig zu überragen, so dass die Eckpfosten ohne Belastung durch die Bühnenträgerprofile einschließlich Bühne bleiben.

Wenn vorzugsweise die Bühnenstützen an der vom Gang entfernten Seite benachbart zu den hinteren Eckpfosten und diesen bezogen auf die Tiefe der Regale nachgeordnet vorgesehen sind, lässt sich ausschließen, dass ein Staplerfahrzeug oder Regalbediengerät, das im Gang fährt, die Bühnenstützen überhaupt erreichen kann.

Eine weitere vorteilhafte Ausgestaltung der Erfindung sieht vor, dass die in Längsrichtung des Gangs einander gegenüberliegenden Bühnenstützen wie die Eckpfosten über in den Ladungsebenen verlaufenden, Auflager für das Ladegut bereitstellenden Längsträgern miteinander verbunden sind. Die Bühnenstützen, die integriert mit den Eckpfosten zum Unterbau der Bühne keinen zusätzlichen Platz erfordern, denn die Gesamteinheit lässt sich im Flächenmaß herkömmlicher Palettenregale ausbilden, dienen somit gleichzeitig auch zur Komplettierung der Lagerfläche.

Ein bevorzugter Vorschlag der Erfindung sieht vor, daß die auf den Bühnenstützen befestigten Verbindungsträger der Bühne den Gang und die beidseitigen Regale überbrückend in Querrichtung zu diesen verlaufend angeordnet sind. Es lässt sich damit eine vollständig durchgehende stabile Bühnenkonstruktion ermöglichen, die sich über mehrere Bühnenstützen und auch Regalreihen erstrecken kann.

Insgesamt wird zudem begünstigt, dass die vorhandenen, wirkenden Kräfte besser auf die Bühnenstützen geleitet und verteilt werden.

Weitere Merkmale und Einzelheiten der Erfindung ergeben sich aus den Ansprüchen und den Zeichnungen.

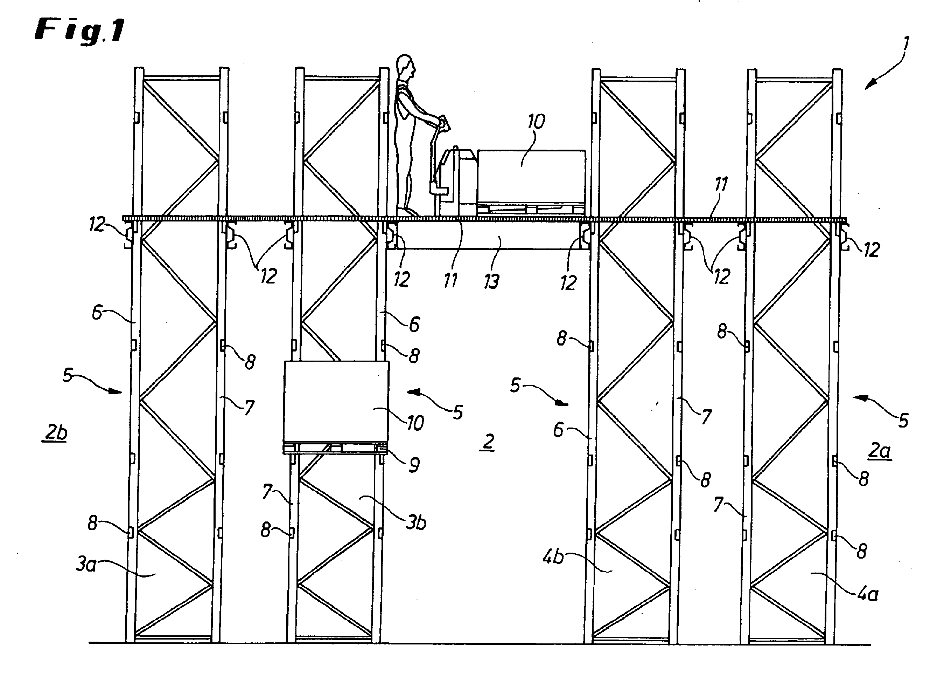

Die Fig. 1 zeigt schematisch einen Querschnitt eines zum Stand der Technik zählenden Palettenregals 1. Dieses besteht aus beidseitig eines mittleren Gangs 2 in dessen Längsrichtung mehreren aneinandergereihten und orthogonal dazu blockweise, hier in zwei Reihen, angeordneten Regalen 3 a, 3 b bzw. 4 a, 4 b sowie links und rechts davon angrenzenden äußeren Gängen 2 a, 2 b. Die Eckpfosten der Regale, von denen hier nur ― jeweils von der Bedienseite 5 gemäß Pfeil her gesehen ― ein vorderer Eckpfosten 6 und ein hinterer Eckpfosten 7 zu erkennen sind, begrenzen das Regalflächenmaß. Die jeweils beiden vorderen Eckpfosten 6 und die beiden hinteren Eckpfosten 7 sind in den Ladungsebenen über Ladungs- bzw. Längsträger 8 miteinander verbunden, auf denen in jedem Regalfach eine Palette 9 mit dem Ladegut 10 abgestellt werden kann.

Eine in einer Höhenebene aufgesetzte Bühne 11, die über eine nicht dargestellte Treppe zugänglich ist, macht es möglich, dass auch die hochgelegenen Regalfächer für eine Person erreichbar sind.

Die Eckpfosten 6 bzw. 7 aller aneinandergereihten Regale 3 a und 3 b bzw. 4 a und 4 b an deren Außenseiten überbrückend, d. h. in Längsrichtung des Gangs 2, erstrecken sich zur Abstützung der Bühne 11 Trägerprofile 12. Der Gang 2 wird von einem Verbindungsträger 13 überspannt, der sich ebenfalls auf den Trägerprofilen 12 abstützt, und zwar auf denen der vorderen Eckpfosten 6 der an den Gang 2 angrenzenden Regale 3 b bzw. 4 b, d. h. den inneren Reihen der im Ausführungsbeispiel in doppelreihiger Blockweise angeordneten Regale 3 a, 3 b und 4 a, 4 b. Das gesamte Gewicht aller Bauteile der Bühnenkonstruktion lastet auf den Regal-Eckpfosten 6, 7.

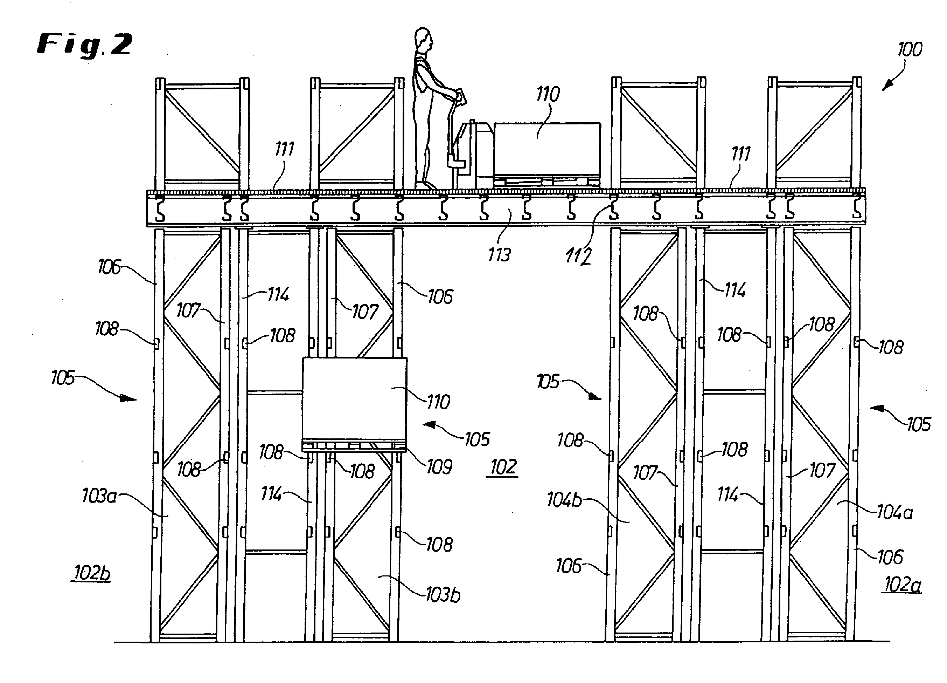

ln Fig. 2 ist im Querschnitt schematisch die Bauweise einer erfindungsgemäßen Lagerregalanordnung 100 eines Palettenregals dargestellt. Der Aufbau einschließlich zur Verfügung stehendem Lagerraum und für die Lagerregalanordnung100 benötigtem Platzbedarf stimmt grundsätzlich mit dem des Palettenregals 1 der Fig. 1 überein; die gleichen Bauteile sind daher mit denselben Bezugsziffern versehen, zur Unterscheidung lediglich als 3-stellige Ziffern.

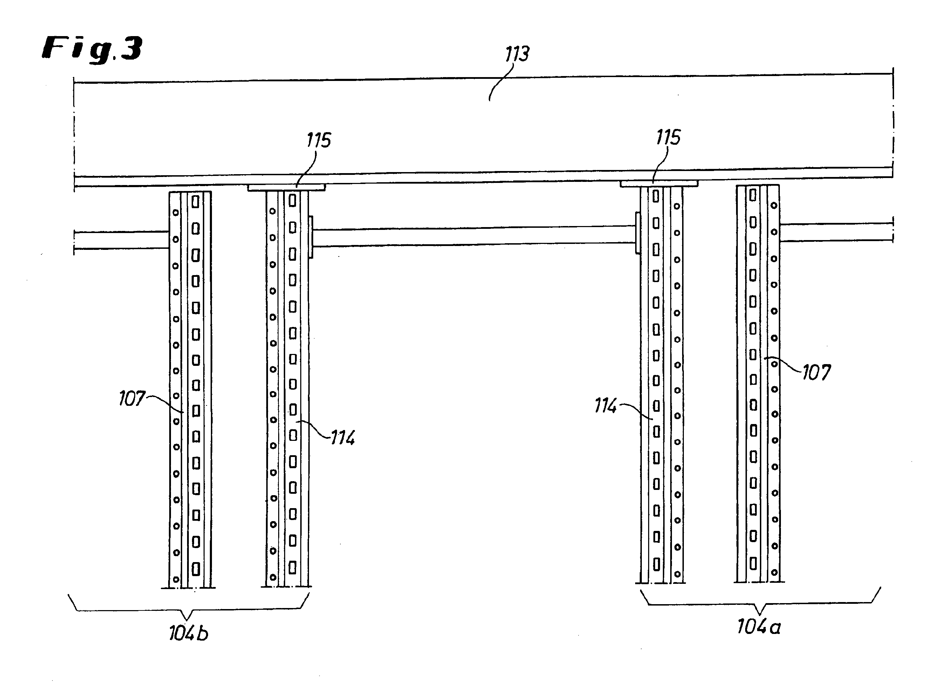

Die Lagerregalanordnung 100 weicht von dem Palettenregal 1 erfindungsgemäß entscheidend durch die Stützkonstruktion der Bühne 111 ab. Denn die Bühne 111 ist entkoppelt von den Regalen 103 a, 103 b und 104 a, 104 b abgestützt, nämlich über in die Regale integrierte, von deren Eckpfosten 106, 107 allerdings lastunabhängige Bühnenstützen 114, die geringfügig länger bzw. höher (vgl. Fig. 3) als die Regal-Eckpfosten 106, 107 sind. Die Kopfstücke 115 der Bühnenstützen 114 sind mit einem Verbindungsträger 113 verschraubt (vgl. die Fig. 3), auf den die Bühne 111 aufliegt, der hier in Querrichtung verlaufend verlegt ist, wobei er den Gang 102 und die beidseitig in Doppelreihe angeordneten Regale 103 a, 103 b sowie 104 a, 104 b überbrückt.

Die ausschließlich die Last der Bühnenkonstruktion ― Verbindungsträger 114 mit sich in Ganglängsrichtung zum jeweils nächstfolgenden Verbindungsträger (in den Zeichnungen nicht zu erkennen) erstreckenden Trägerprofilen 112 und Bühne 111 ― tragenden Bühnenstützen 114 sind in den Ladungsebenen ebenfalls mit Längsträgern 108 versehen, so dass sie mit den Längsträgern 108 der Regale 103 a, 103 b sowie 104 a, 104 b als Auflager für eine Palette 109 mit Ladegut 110 zur Verfügung stehen, wie in Fig. 2 für das Regal 103 b dargestellt.

Als Einzelheit der Fig. 2 zeigt die Fig. 3 für die Regale 104 a, 104 b deren Lastentkopplung durch die Bühnenstützen 114.

### Bezugszeichenliste

- 1; 100: Palettenregal
- 2, 2 a, 2 b; 102, 102 a, 102 b: Gang
- 3 a, 3 b; 103 a, 103 b: Regal
- 4 a, 4 b, 104 a, 104 b: Regal
- 5; 105: Bedienseite
- 6; 106: vorderer Eckpfosten
- 7; 107: hinterer Eckpfosten
- 8; 108: Ladungs- bzw. Längsträger
- 9; 109: Palette
- 10; 110: Ladegut
- 11; 111: Bühne
- 12; 112: Trägerprofil
- 13; 113: Verbindungsträger
- 114: Bühnenstütze
- 115: Kopfstück

## Patentansprüche

1. Lagerregalanordnung (100), insbesondere für auf Paletten (109) umzuschlagende Waren, umfassend mindestens einen Gang (102; 102 a, 102 b) mit parallel zu dessen Seiten aneinandergereiht ausgebildeten, orthogonal zum Gang optional blockweise angeordneten Regalen (103 a, 103 b; 104 a, 104 b), die jeweils aus vorderen und hinteren Eckpfosten (106, 107) sowie in den Ladungsebenen vorgesehenen, die beiden vorderen und die beiden hinteren Eckpfosten eines Regals verbindenden, Auflager für das Ladegut (110) bereitstellenden Längsträgern (108) bestehen, und zumindest eine aufgesetzte, für Personen zugängliche, auf Trägerprofilen (112) abgestützte Bühne (11),
**dadurch gekennzeichnet,**
**dass** die Bühne (111) entkoppelt von den Regalen (103 a, 103 b; 104 a, 104 b) abgestützt ist.

2. Lagerregalanordnung nach Anspruch 1,
**dadurch gekennzeichnet,**
**dass** die Regale (103 a, 103 b; 104 a, 104 b) in Flucht zu den von ihrer Bedienungsseite (105) her gesehen außen liegenden vorderen und hinteren Eckpfosten (106, 107) angeordnete Bühnenstützen (114) mit einer größeren Länge als die Eckpfosten (106, 107) aufweisen.

3. Lagerregalanordnung nach Anspruch 2,
**dadurch gekennzeichnet,**
**dass** die Bühnenstützen (114) an der vom Gang (102) entfernten Seite benachbart zu den hinteren Eckpfosten (107) und diesen bezogen auf die Tiefe der Regale nachgeordnet vorgesehen sind.

4. Lageranordnung nach Anspruch 2 oder 3,
**dadurch gekennzeichnet,**
**dass** die in Längsrichtung des Gangs (102) einander gegenüberliegenden Bühnenstützen (114) ebenso wie die Eckpfosten (106, 107) über in den Ladungsebenen verlaufenden, Auflager für das Ladegut (109; 110) bereitstellenden Längsträgern (108) miteinander verbunden sind.

5. Lagerregalanordnung nach einem der Ansprüche 1 bis 4,
**dadurch gekennzeichnet,**
**dass** die auf den Bühnenstützen (114) befestigten Verbindungsträger (113) der Bühne (111) den Gang (102) und die beidseitigen Regale (103 a, 103 b; 104 a, 104 b) überbrückend in Querrichtung zu diesen verlaufend angeordnet sind.

## Claims

1. A storage shelf assembly (100), particularly for goods to be handled on pallets (109), featuring at least one aisle (102; 102 a, 102 b) with shelves (103 a, 103 b; 104 a, 104 b) that are lined up parallel to its sides and arranged orthogonal to the aisle, optionally block-by-block, wherein said shelves respectively consist of front and rear corner posts (106, 107) and longitudinal beams (108) provided on the loading levels, and wherein said longitudinal beams connect the two front and the two rear corner posts of a shelf and provide supports for the freight (110), and featuring at least one fitted platform (11) that is accessible to persons and supported on beam sections (112),
**characterized in**
**that** the platform (111) is supported separately of the shelves (103 a, 103 b; 104 a, 104 b) .

2. The storage shelf assembly according to Claim 1,
**characterized in**
**that** the shelves (103 a, 103 b; 104 a, 104 b) feature platform posts (114) that are arranged in alignment with the outer front and rear corner posts (106, 107) viewed from the operating side (105) of the shelves and have a greater length than the corner posts (106, 107).

3. The storage shelf assembly according to Claim 2,
**characterized in**
**that** the platform posts (114) are provided adjacent to and, with respect to the depth of the shelves, behind the rear corner posts (107) on the distant side referred to the aisle (102).

4. The storage shelf assembly according to Claim 2 or 3,
**characterized in**
**that** the platform posts (114) that lie opposite of one another in the longitudinal direction of the aisle (102), as well as the corner posts (106, 107), are connected to one another by means of the longitudinal beams (108) that extend in the loading levels and provide supports for the freight (109; 110).

5. The storage shelf assembly according to one of Claims 1 to 4,
**characterized in**
**that** the connecting beams (113) of the platform (111) mounted on the platform posts (114) are arranged such that they extend transverse to and bridge the aisle (102) and the shelves (103 a, 103 b; 104 a, 104 b) on both sides.

## Revendications

1. Agencement de rayonnages d'entrepôt (100), en particulier pour des marchandises à manutentionner sur palettes (109), comprenant au moins un couloir (102 ; 102 a, 102 b) comprenant des rayonnages (103 a, 103 b ; 104 a, 104 b) disposés en option en blocs, orthogonaux au couloir et formés en rangées l'un sur l'autre parallèlement à ses côtés, qui sont composés respectivement de piliers d'angle (106, 107) avant et arrière ainsi que de supports longitudinaux (108) prévus dans les niveaux de chargement, reliant les deux piliers d'angle avant et arrière d'un rayonnage et servant de support à la marchandise (110), et au moins une plateforme (11) posée, appuyée sur des profilés porteurs (112), accessible à des personnes,
**caractérisé en ce que**
la plateforme (111) est appuyée de façon découplée des rayonnages (103 a, 103 b ; 104 a, 104 b).

2. Agencement de rayonnages d'entrepôt selon la revendication 1,
**caractérisé en ce que**
les rayonnages (103 a, 103 b ; 104 a, 104 b) présentent des appuis de plateforme (114) disposés en alignement avec les piliers d'angle (106, 107) avant et arrière extérieurs vu depuis leur côté de manutention (105), présentant une longueur plus grande que les piliers d'angle (106, 107).

3. Agencement de rayonnages d'entrepôt selon la revendication 2,
**caractérisé en ce que**
les appuis de plateforme (114) sont prévus sur le côté éloigné du couloir (102) dans le voisinage des piliers d'angle (107) arrière et en aval par rapport à ceux-ci sur la profondeur des rayonnages.

4. Agencement de rayonnages d'entrepôt selon la revendication 2 ou 3,
**caractérisé en ce que**
les appuis de plateforme (114) opposés l'un à l'autre dans le sens longitudinal du couloir (102) sont reliés entre eux tout comme les piliers d'angle (106, 107), via des supports longitudinaux (108) servant de support à la marchandise (109 ; 110) et passant dans les niveaux de chargement.

5. Agencement de rayonnages d'entrepôt selon l'une des revendications 1 à 4,
**caractérisé en ce que**
les supports de liaison (113) de la plateforme (111) fixés sur les appuis de plateforme (114) sont disposés en chevauchant le couloir (102) et les rayonnages bilatéraux (103 a, 103 b ; 104 a, 104 b) dans le sens transversal à ceux-ci.
